# EUROPEAN PATENT SPECIFICATION

(11) **EP 2 213 932 B1**
(45) Date of publication and mention of the grant of the patent: **20.04.2016**
(21) Application number: 10000706.1
(22) Date of filing: 25.01.2010
(51) Int. Cl.: H05B 33/08, F21Y 115/10, F21V 29/71, F21V 29/89, F21S 8/02, F21V 23/00, F21V 23/04, F21V 29/00

(54) **LED illumination fixture**
LED-Beleuchtungsbefestigung
Appareil d'éclairage à DEL

(30) Priority: 30.01.2009 JP 2009020697
(43) Date of publication of application: 04.08.2010
(73) Proprietor: Panasonic Corporation, Osaka 571-8501 (JP)
(72) Inventor: Mizukawa, Hiromitsu, Osaka (JP); Kuroki, Yosifumi, Osaka (JP); Kumada, Kazuhiro, Hyogo (JP)
(74) Representative: Rüger, Barthelt & Abel

(56) References cited:
- DE-U1-202004 001 177
- GB-A- 2 349 942
- JP-A- 2001 307 541
- JP-A- 2008 171 584
- US-A1- 2006 262 545

## Description

### [Field of the Invention]

The present invention relates to an LED illumination fixture using a light emitting diode (hereinafter referred to as LED).

### [Background Art]

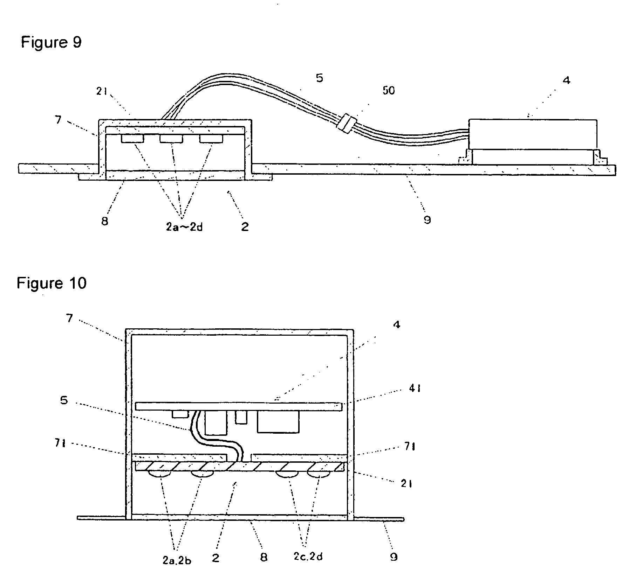

In many conventional LED illumination fixtures, as shown in Fig. 9, a fixture housing 7 for storing an LED unit 2 has been arranged separately from a power source unit 4 which provides an output to allow LEDs 2a to 2b to emit light. This necessitates on-site working of mounting the power source unit 4 and then mounting the fixture housing 7, followed by connecting them with a lead wire 5 and a connector 50, resulting in a prolonged time required for the mounting operation compared with the case of an illumination fixture in which the power source unit 4 and the LED unit 2 are integrated.

Meanwhile, as shown in Fig. 10, Patent Document 1 (Japanese Patent Application Laid-Open No. 2004-55800) discloses an LED illumination fixture of an integrated type in which the power source unit 4 and the LED unit 2 are stored in the fixture housing 7. The fixture housing 7 is embedded into a ceiling 9. The fixture housing 7 is made of a cylindrical body of metal with a lower end opening, and the lower end opening part is covered by a light diffusing plate 8. The LED unit 2 is arranged so as to oppose to the light diffusing plate 8. Reference numeral 21 refers to an LED mounting substrate for mounting the LEDs 2a to 2d in the LED unit 2

In this conventional example, a heat dissipating plate 71 thermally connected to the fixture housing 7 is arranged on a rear side of the mounting substrate 21 of the LED unit 2, which is attached in the fixture. Heat generated in the LEDs 2a to 2d is dissipated via the heat dissipating plate 71 so as to achieve an effect of reducing the temperature of the LEDs 2a to 2d and increasing light output.

### [Conventional Technique Document]

### [Patent Document]

Japanese Patent Abstract Publication Number 2008171584 discloses an illumination device comprising a lamp portion and a power supply inched to the lamp portion. The lamp portion comprises a plurality of radiation fins installed at the outer bottom face of the lamp portions main body.

### [Summary of the Invention]

### [Problems to be solved by the Invention]

However, as shown in Fig. 10, arranging a print substrate 41 of the power source unit 4 in the vicinity of the LED unit 2 prevents convection inside the fixture, causing a hindrance to heat dissipation of the LEDs 2a to 2d. The power source unit 4 includes life-limited members such as electrolytic capacitors, and there is such a problem that when increased in temperature due to radiation heat from the LED unit 2, the service life of such components shortens. There is further such a problem that increasing the number of LED lamps in response to demands for higher output increases the heat generated by the LED unit 2, resulting in increased stress to the members of the power source unit 4.

The present invention was achieved by taking the above problems into consideration, and it is an object of the present invention to provide an LED illumination fixture with an integrated power source unit wherein effects of radiation heat from an LED unit to a power source unit can be reduced. It is also an object of the present invention to reduce stress to members of the power source unit.

### [Means to solve the Problems]

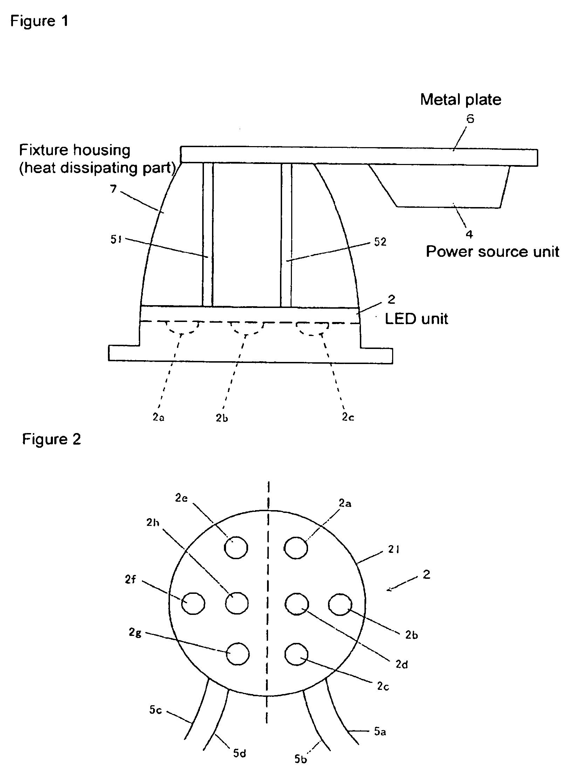

In order to solve the above problems, an LED illumination fixture according to a first aspect of the present invention includes, as shown in Fig 1 and Fig. 2, an LED unit 2 with LEDs 2a to 2h mounted on a mounting substrate 21, a heat dissipating part 7 for dissipating heat generated in the LED unit 2, a metal plate 6 attached to the heat dissipating part 7, and a power source unit 4 attached to the metal plate 6.

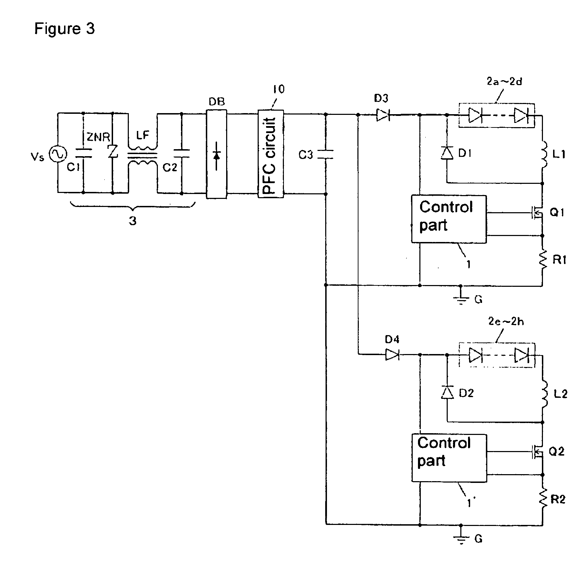

A second aspect of the present invention is based on the first aspect and characterized in that the power source unit 4 has a plurality of switching power sources each having the same configuration as shown in Fig. 3.

A third aspect of the present invention is based on the second aspect and characterized as shown in Fig. 3 in that the power source unit 4 includes an input filter circuit 3 connected to a commercial AC power source Vs, and a rectifier circuit DB connected to the input filter circuit 3, wherein the input filter circuit 3 and the rectifier circuit DB are shared by the plurality of the switching power sources.

A fourth aspect of the present invention is based on the second aspect and characterized as shown in Fig. 3 in that the power source unit 4 includes an input filter circuit 3 connected to a commercial AC power source Vs, a rectifier circuit DB connected to the input filter circuit 3, and a power factor improving circuit 10 connected to an output of the rectifier circuit DB, wherein the input filter circuit 3, the rectifier circuit DB, and the power factor improving circuit 10 are shared by the plurality of the switching power sources.

A fifth aspect of the present invention is based on the first to fourth aspects of the invention and characterized in that the plurality of the switching power sources are mounted on one print substrate.

### [Effect of the Invention]

The present invention provides for the advantageous effect of alleviating the influence of radiation heat that the power source unit receives from the LED unit, in spite of the fact that the inventive LED illumination fixture is of the integrated type, which can be easily operated compared with conventional LED illumination fixtures of the separate power source type. The present invention also provides for the advantageous effect of alleviating the stress to the members of the power source unit even in the case of enhanced output through increasing the number of LED lamps.

### [Brief Description of the Drawings]

[Fig.1] Fig. 1 is a side view showing a schematic configuration of an LED illumination fixture according to a first embodiment of the present invention.
[Fig. 2] Fig. 2 is a front view showing a configuration of an LED unit of the LED illumination fixture according to the first embodiment of the present invention.
[Fig. 3] Fig. 3 is a circuit diagram showing the LED illumination fixture according to the first embodiment of the present invention.
[Fig.4] Fig. 4 is a circuit diagram showing an LED illumination fixture according to a second embodiment of the present invention.
[Fig.5] Fig. 5 is a circuit diagram showing an LED illumination fixture according to a third embodiment of the present invention.
[Fig.6] Fig. 6 is a circuit diagram showing an LED illumination fixture according to a fourth embodiment of the present invention.
[Fig.7] Fig. 7 is a circuit diagram showing an LED illumination fixture according to a fifth embodiment of the present invention
[Fig.8] Fig. 8 is a circuit diagram showing an LED illumination fixture according to a sixth embodiment of the present invention.
[Fig.9] Fig. 9 is a cross sectional view showing a conventional LED illumination fixture of the separate power source type.
[Fig. 10] Fig. 10 is a cross sectional view showing a conventional LED illumination fixture of the integrated power source type.

### [Best Mode for Carrying Out the Invention]

### (First embodiment)

Fig. 1 is a side view showing a schematic configuration of an LED illumination fixture according to the present invention. In operation, the LED illumination fixture is used as a downlight with a fixture housing 7 stored in an open portion of a ceiling 9 in the same manner with the conventional examples shown in Fig. 9 and Fig. 10. As opposed to the LED illumination fixture of the separate power source type shown in Fig. 9, an LED unit 2 and a power source unit 4 are integrated to allow for easy operation. Moreover, in comparison with the conventional LED illumination fixture of the integrated type shown in Fig. 10, the power source unit 4 is less likely to be influenced by radiation heat and convection heat sent from the LED unit 2.

As shown in Fig. 1, the LED unit 2 is mounted on a lower part of the fixture housing 7. Mounted on an upper part of the fixture housing 7 is a lower part of one end of a metal plate 6. The metal plate 6 is arranged in a substantially horizontal manner. Mounted on a lower part of the other end of the metal plate 6 is the power source unit 4. A view from above of the LED illumination fixture shows that a central part of the LED unit 2 is displaced from a central part of the power source unit 4. This makes the power source unit 4 less likely to be influenced by radiation heat and convection heat sent from the LED unit 2.

Although there is no limitation to the shape of the fixture housing 7, it is possible to use a shape such as a shell-type lampshade with an upwardly diminishing diameter as shown in Fig. 1. The fixture housing 7 is preferably made of metal such as aluminum from viewpoints of intensity, cost, and heat dissipation property. It is also possible to provide a heat dissipating fin on the surface of the fixture housing 7.

A view from below of the LED unit 2 has a shape as shown in Fig. 2. Eight LEDs 2a to 2h are mounted on a circular mounting substrate 21. The LEDs are classified into two LED circuits along a broken line shown in Fig. 2. The LEDs 2a to 2d are connected in series from each other with each anode connected to each cathode, while the LEDs 2e to 2h are also connected in series from each other with each anode connected to each cathode.

The LED 2a is connected at the anode side to a plus power source line 5 and the LED 2d is connected at the cathode side to a minus power source line 5b, thus allowing the LEDs 2a to 2d to emit light. The LED 2e is connected at the anode side to a plus power source line 5c and the LED 2h is connected at the cathode side to a minus power source line 5d, thus allowing the LEDs 2e to 2h to emit light.

If a voltage equal to or more than the total of forward direction voltages Vf of the four LEDs is applied, a light flux can be obtained from the LEDs in accordance with the value of a flowing current. Since the forward direction voltage Vf is usually approximately 3.5V, a serial connection of four LEDs enables lighting at a DC voltage of equal to or more than 4 × 3.5V.

Current is supplied from the power source unit 4 to the LED unit 2 by using the power source lines 5a and 5b via a connection member 51 and the power source lines 5c and 5d via a connection member 52. A lower end of each of the connection members 51 and 52 is mounted on an upper surface of the LED unit 2 while an upper end of each of the connection members 51 and 52 is mounted on a lower end of the metal plate 6. The connection members 51 and 52 may also be a pipe of metal or resin, in which case the power source lines 5a and 5b and the power source lines 5c and 5d may be passed inside the connection members 51 and 52, respectively. The connection members 51 and 52 may also be arranged inside or outside the fixture housing 7.

Fig. 3 shows one example of a circuit configuration of the power source unit 4. Connected to a commercial AC power source Vs is an AC input terminal of a diode bridge DB via a line filter LF. Connected to the power source side of the line filter LF is a parallel circuit of a noise preventing capacitor C1 and a nonlinear resistor element ZNR. Connected to the output terminal of the line filter LF is a noise preventing capacitor C2. The line filter LF, the noise preventing capacitors C1 and C2, and the nonlinear resistor element ZNR constitute an input filter circuit 3.

Connected to a DC output terminal of the diode bridge DB is a smoothing capacitor C3 via a PFC circuit 10. The PFC circuit 10 is a power factor improving circuit composed of, for example, a step-up chopper circuit and other circuits and serves as a circuit to reduce distortion of input current by turning a current inputted from the commercial AC power source Vs into a shape substantially similar to that of an input voltage. The capacitor C3 connected to an output of the PFC circuit 10 is a smoothing capacitor in which a DC voltage is charged.

The smoothing capacitor C3 is connected via diodes D3 and D4 to two switching power sources of the same configuration. A first switching power source is a step-down chopper circuit composed of an inductor L1, a switching element Q1, a diode D1, a current detecting resistor R1, and a control part 1, and supplies current to a first group of LEDs, 2a to 2d. A second switching power source is a step-down chopper circuit composed of an inductor L2, a switching element Q2, a diode D2, a current detecting resistor R2, and a control part 1', and supplies current to a second group of LEDs, 2e to 2h.

The first switching power source will be described below. The control part 1 is a control IC for the switching power source and controls current through the LEDs 2a to 2d by controlling the on/off time of the switching element Q1 while monitoring current through the current detecting resistor R1. When the switching element Q1 is turned on, current flows through a route of the smoothing capacitor C3, the diode D3, the LEDs 2a to 2d, the inductor L1, the switching element Q1, the current detecting resistor R1, and the smoothing capacitor C3. At this time, the current through the inductor L1 gradually increases so that electromagnetic energy accumulates on the inductor L1. When the switching element Q1 is turned off, the electromagnetic energy accumulated on the inductor L1 is discharged through a route of the inductor L1, the diode D1, the LEDs 2a to 2d, and the inductor L1. This operation is repeated at a high frequency so as to control an average current through the LEDs 2a to 2d at a desired current. The same operation applies to the second switching power source to drive the LEDs 2e to 2h.

Since in the present embodiment two switching power sources are provided, even if one LED group is not lighted due to a fail or other cause, the other LED group lights, thus providing the advantage of preventing a blackout. There is also another advantage of reducing stress to the circuit members because load current is dispersed among the switching elements Q1 and Q2, the inductors L1 and L2, and the diodes D1 and D2. The plurality of the switching power sources may be mounted on one print substrate.

Note that when a print substrate 41 of the power source unit 4 is stored in the fixture housing 7 as shown in the conventional example of Fig. 10, the fixture housing 7 can also be used as a case for the power source unit 4, whereas in the case in which the power source unit 4 is arranged outside the fixture housing 7 as shown in Fig. 1 (i.e. present invention) and Fig. 9 (i.e. conventional example), it is necessary to prepare a separate case to store the print substrate of the power source unit 4. Particularly when the power source unit 4 is configured to include the switching power sources as shown in Fig. 3, electromagnetic shielding is preferable by using a metal case to cover the entire print substrate of the power source unit 4 so as to avoid radiation of high frequency noise.

### (Second embodiment)

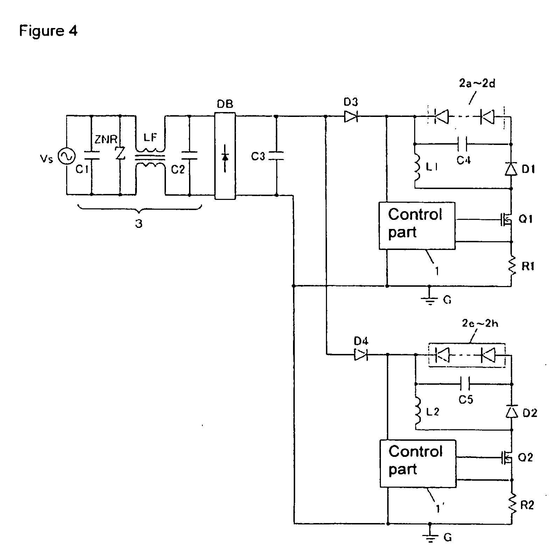

Fig. 4 is a circuit diagram according to a second embodiment of the present invention. In the present embodiment, the PFC circuit 10 arranged for improvement of input power factor in the first embodiment is omitted; instead, a step-up/step-down chopper circuit (i.e. chopper circuit of the polarity inversion type) having a power factor improving function is employed in each of the switching power sources.

Connected to the smoothing capacitor C3 via the diodes D3 and D4 are two switching power sources of the same configuration. A first switching power source is a step-up/step-down chopper circuit (i.e. chopper circuit of the polarity inversion type) composed of the inductor L1, the switching element Q1, the diode D1, a capacitor C4, the current detecting resistor R1, and the control part 1, and supplies current to a first groups of LEDs, 2a to 2d. A second switching power source is a step-up/step-down chopper circuit (i.e. chopper circuit of the polarity inversion type) composed of the inductor L2, the switching element Q2, the diode D2, a capacitor C5, the current detecting resistor R2, and the control part 1', and supplies current a second group of LEDs 2e to 2h.

The first switching power source will be described below. The control part 1 is a control IC for the switching power source and controls current through the LEDs 2a to 2d by controlling the on/off time of the switching element Q1 while monitoring current through the current detecting resistor R1. When the switching element Q1 is turned on, current flows through a route of the smoothing capacitor C3, the diode D3, the inductor L1, the switching element Q1, the current detecting resistor R1, and the smoothing capacitor C3. At this time, the current through the inductor L1 gradually increases so that electromagnetic energy accumulates on the inductor L1. When the switching element Q1 is turned off, the electromagnetic energy accumulated on the inductor L1 is discharged through a route of the inductor L1, the diode D1, the LEDs 2a to 2d, and the inductor L1. This operation is repeated at a high frequency so as to control an average current through the LEDs 2a to 2d at a desired current. Note that the capacitor C4 is connected in parallel with the series circuit of the LEDs 2a to 2d so as to supply current to the LEDs 2a to 2d even during a period of time when the diode D1 is cut off while the switching element Q1 is on. The same operation applies to the second switching power source to drive the LEDs 2e to 2h.

The switching elements Q1 and Q2 are subjected to switching at a frequency which is sufficiently higher than a frequency of the commercial AC power source Vs, and a capacity of the smoothing capacitor C3 is set at 1µF or less (e.g. 0.23 to 0.47µF), whereby an input current can be introduced even during a period of low voltage outputted from the commercial AC power source Vs, thereby increasing the input power factor from the commercial AC power source Vs. On the other hand, leakage of high frequency noise through the input power source lines is a problem. In view of this, the input filter circuit 3 including the line filter LF and the noise preventing capacitors C1 and C2 is arranged in the power source input part to prevent high frequency noise from leaking to the input power source lines.

The use of a step-up/step-down chopper circuit (i.e. chopper circuit of the polarity inversion type) as a switching power source as in the present embodiment facilitates a measurement to prevent rush current. That is, in the circuit shown in Fig. 4, the LEDs 2a to 2d and 2e to 2h are oriented opposite to the rectified output of the diode bridge DB, and thus even if the switching current through the switching elements Q1 and Q2 unexpectedly increases during the unstable period immediately after supply of power, no rush current flows through the LEDs 2a to 2d and 2e to 2h. This prevents deterioration of the LEDs caused by rush current and thus achieves an elongated service life of the LED illumination fixture.

### (Third embodiment)

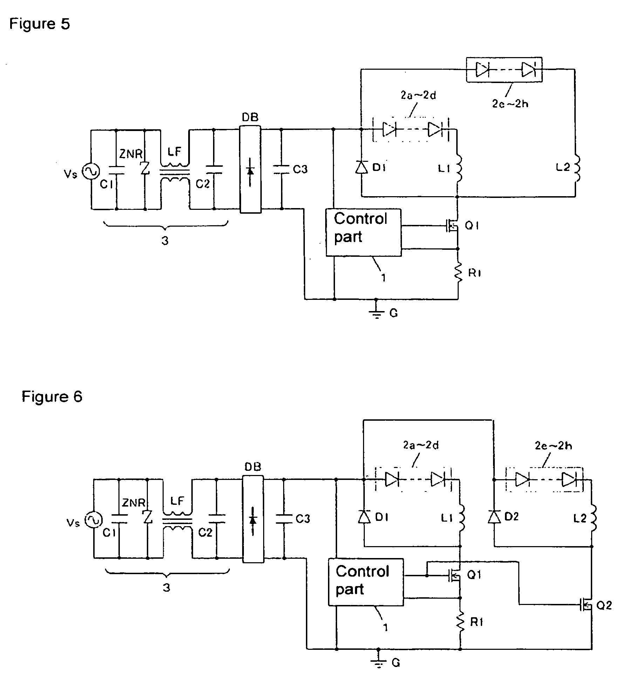

Fig. 5 is a circuit diagram according to a third embodiment of the present invention. The present embodiment is a simplified embodiment of the first embodiment, wherein the PFC circuit 10 for improving input power factor is omitted and the step-down chopper circuit serving as the switching power source plays a role of improving input power factor. Also in the present embodiment, the switching element Q1 is switched at a frequency sufficiently higher than the frequency of the commercial AC power source Vs, and the capacity of the smoothing capacitor C3 is set as small as 1µF or less (e.g. 0.23 to 0.47µF). This enables the input current to be introduced until voltage outputted after rectification reduces to or below the load voltage, and thus the effect of improving input power factor can be expected to some extent. In the step-down chopper circuit, a differential voltage between the power source voltage and the load voltage is applied to the inductor L1 upon turning the switching element Q1 on, and thus increasing the number of serially connected LEDs prolongs the period of absence of input current flow, resulting in a deteriorated input power factor. In view of this, the present embodiment restricts the number of serially connected LEDs to approximately 3 to 4. Since the forward direction voltage of each LED is approximately 3.5V, securing a serial connection of approximately 3 to 4 LEDs restricts the load voltage to as low as approximately 10.5 to 14V.

If eight LEDs are connected in series, the load voltage is doubled, which prolongs the period of absence of input current, resulting in a possibility of failure to satisfy Class C of the harmonic control guideline. Specifying the number of serially connected LEDs up to four and connecting the LEDs in parallel as necessary prevent the input power factor from decreasing even in the case of increasing the number of lamps.

Note that, if the inductor L2 is omitted in Fig. 5 to connect the series circuit of the LEDs 2a to 2d and the series circuit of the LEDs 2e to 2h directly in parallel, there is such a danger that a variation in the forward direction voltage between the LED series circuits may result in a current inconveniently flowing through only one of the series circuits; however, the inductors L1 and L2 are interposed to allow current to flow substantially uniformly through the two LED series circuits.

### (Fourth embodiment)

Fig. 6 is a circuit diagram according to a fourth embodiment of the present invention. In the present embodiment, a diode D2 and a switching element Q2 are added to the third embodiment so as to enhance independence of the switching power source for the LEDs 2a to 2d and the switching power source for the LEDs 2e to 2h. In comparison with the third embodiment, a switching current is dispersed between the switching elements Q1 and Q2 and a regenerative current is also dispersed between the diodes D1 and D2, whereby there is an effect of reducing stress to the circuit members. Moreover, for the current detecting resistor R1, only a switching current of the switching element Q1 flows therethrough, so that the switching element Q2 suffers no power loss caused by the current detecting resistor. In the circuit example of Fig. 6, an average current through the LEDs 2a to 2d is controlled to be constant, whereby an average current through the LEDs 2e to 2h is controlled to be constant as a result. It is also possible to detect a total of load currents of both LED series circuits or a higher load current as shown in fifth and sixth embodiments, described later.

### (Fifth embodiment)

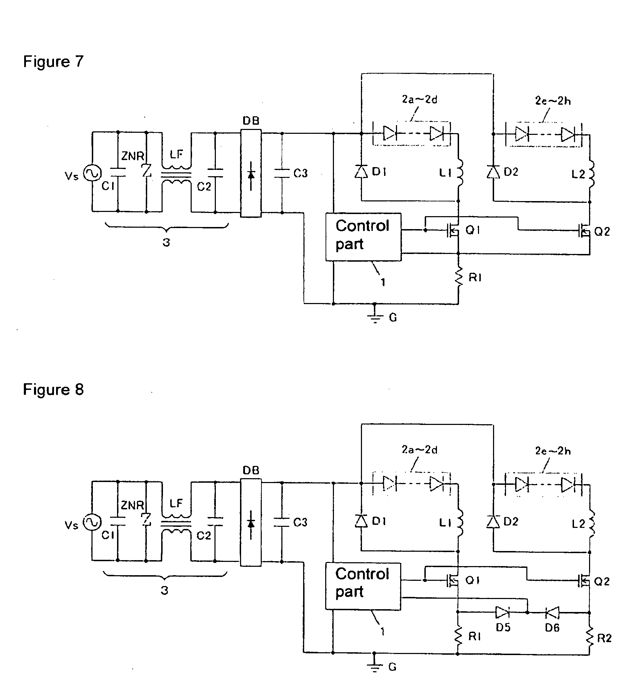

Fig. 7 is a circuit diagram according to a fifth embodiment. In the present embodiment, the current detecting resistor R1 in the fourth embodiment to detect a current flowing into the switching element Q1 is connected to another switching element Q2 so as to receive current flowing therethrough. The current detecting resistor R1 detects a total of the currents through the switching elements Q1 and Q2, whereby a total of the load currents through both of them can be controlled to be constant in comparison with the fourth embodiment. The current detecting resistor R1 may have half the resistance value of the current detecting resistor R1 shown in Fig. 6 insofar as the control part 1 is configured in the same manner.

### (Sixth embodiment)

Fig. 8 is a circuit diagram according to a sixth embodiment. In the present embodiment, in addition to the current detecting resistor R1 in the fourth embodiment to detect current through the switching element Q1, a current detecting resistor R2 is arranged to detect current through the switching element Q2, and a higher voltage among the voltages detected by both resistors is selected by diodes D5 and D6 and inputted to a current detecting terminal of the control part 1. Since the control part 1 detects a higher current among the currents through the switching elements Q1 and Q2, a higher load current can be controlled to be constant in comparison with the fourth and fifth embodiments. This prevents deterioration of the LEDs caused by overcurrent and thus achieves an elongated life of the LED illumination fixture.

Note that while the step-down chopper circuit is exemplified as the switching power source in the third to sixth embodiments, a step-up/step-down chopper circuit (i.e. chopper circuit of the polarity inversion type) may also be applied as the switching power source. The switching power source may also be a monolithic DC-DC converter having a flyback transformer, and there is no limitation to the circuit configuration.

### [Description of Reference Numerals]

- 2: LED unit
- 21: LED mounting substrate
- 2a to 2h: LED
- 4: Power source unit
- 6: Metal plate
- 7: Fixture housing (heat dissipating part)

## Claims

1. An LED illumination fixture for use as a downlight with a fixture housing (7) stored in an open portion of a ceiling (9) comprising:
an LED unit (2) with LEDs (2a-2d) mounted on a mounting substrate;
a heat dissipating part for dissipating heat generated in the LED unit (2);
a metal plate (6) attached to the heat dissipating part; and
a power source unit (4) attached to the metal plate,
**characterized in that**:
the power source unit has a plurality of switching power sources each having a same configuration,
the first switching power source comprising an inductor (L1), a switching element (Q1), a diode (D1), a current detecting resistor (R1), a control part (1), wherein the control part (1) is a control IC for the switching power source and controls current through the LEDs (2a to 2d) by controlling the on/off time of the switching element (Q1) while monitoring current through the current detecting resistor (R1),
wherein the power source unit comprises an input filter circuit connected to a commercial AC power source and a rectifier circuit connected to the input filter circuit, the input filter circuit and the rectifier circuit being shared by the plurality of the switching power sources.

2. The LED illumination fixture according to claim 1, wherein the power source unit comprises an input filter circuit connected to a commercial AC power source, a rectifier circuit connected to the input filter circuit, and a power factor improving circuit connected to an output of the rectifier circuit, the input filter circuit, the rectifier circuit, and the power factor improving circuit being shared by the plurality of the switching power sources.

3. The LED illumination fixture according to any one of claims 1 or 2, wherein the plurality of the switching power sources are mounted on one print substrate.

## Patentansprüche

1. LED-Beleuchtungsanordnung zur Benutzung als Einbaudeckenlampe, mit einem Lampengehäuse (7), das in einer Öffnung einer Decke (9) angeordnet ist, aufweisend:
- Eine LED-Einheit (2) mit LEDs (2a bis 2d), die auf einem Träger angeordnet sind,
- einen Kühlteil zur Ableitung von Wärme, die von der LED-Einheit (2) erzeugt worden ist,
- eine Metallplatte (6), die mit dem Kühlteil verbunden ist und
- eine Leistungsversorgungseinheit (4), die mit der Metallplatte verbunden ist,
**dadurch gekennzeichnet dass**:
Die Leistungsquelle eine Anzahl von geschalteten Leistungsquellen aufweist, die jeweils die gleiche Konfiguration aufweisen,
wobei die geschaltete Leistungsquelle eine Induktivität (L1), ein Schaltelement (Q1), eine Diode (D1), einen stromerfassenden Widerstand (R1), einen Steuerteil (1) aufweist, wobei der Steuerteil (1) eine Steuer-IC für die schaltende Leistungsquelle ist und den Strom durch die LEDs (2a bis 2d) durch Steuerung der An-/Auszeit des Schaltelements (Q1) steuert, während er den Strom durch den stromerfassenden Sensor (R1) überwacht,
wobei die Leistungsquelleneinheit eine Eingangsfilterschaltung aufweist, die mit einer kommerziellen Wechselspannungsquelle verbunden ist und einen Gleichrichterstromkreis aufweist, der mit der Eingangsfilterschaltung verbunden ist, wobei die Eingangsfilterschaltung und die Gleichrichterschaltung von den mehreren geschalteten Leistungsquellen gemeinsam genutzt werden.

2. LED-Lampenanordnung nach Anspruch 1, bei der die Leistungsquelleneinheit eine mit einer kommerziellen Wechselspannungsquelle verbundene Eingangsfilterschaltung, eine mit der Eingangsfilterschaltung verbundene Gleichrichterschaltung und eine Leistungsfaktorverbesserungsschaltung aufweist, die mit einem Ausgang der Gleichrichterschaltung verbunden ist, wobei die Eingangsfilterschaltung die Gleichrichterschaltung und die Leistungsfaktorverbesserungsschaltung von den mehreren schaltenden Leistungsquellen gemeinsam genutzt werden.

3. LED-Beleuchtungseinrichtung nach einem der Ansprüche 1 oder 2, bei der die mehreren schaltenden Leistungsquellen auf einer einzigen Leiterplatte angeordnet sind.

## Revendications

1. Châssis d'éclairage à DEL destiné à être utilisé comme luminaire éclairant vers le bas avec un boîtier de châssis (7) stocké dans une partie ouverte d'un plafond (9) comprenant :
une unité à DEL (2) comportant des DEL (2a-2d) montées sur un substrat de montage ;
une partie de dissipation de chaleur pour dissiper la chaleur produite dans l'unité à DEL (2) ;
une plaque métallique (6) fixée sur la partie de dissipation de chaleur ; et
une unité formant source d'alimentation (4) fixée à la plaque métallique,
**caractérisé en ce que** :
l'unité formant source d'alimentation comporte une pluralité de sources d'alimentation à découpage ayant toutes la même configuration,
la première source d'alimentation à découpage comprenant une inductance (L1), un élément de commutation (Q1), une diode (D1), une résistance de détection de courant (R1), une partie de commande (1), dans lequel la partie de commande (1) est un circuit intégré de commande pour la source d'alimentation à découpage et commande le courant qui traverse les DEL (2a à 2d) en commandant le temps de marche/arrêt de l'élément de commutation (Q1) tout en surveillant le courant qui traverse la résistance de détection de courant (R1),
dans lequel l'unité formant source d'alimentation comprend un circuit de filtrage d'entrée connecté à une source de courant électrique alternatif commerciale et un circuit de redressement connecté au circuit de filtrage d'entrée, le circuit de filtrage d'entrée et le circuit de redressement étant partagés par la pluralité de sources d'alimentation à découpage.

2. Châssis d'éclairage à DEL selon la revendication 1, dans lequel l'unité formant source d'alimentation comprend un circuit de filtrage d'entrée connecté à une source de courant électrique alternatif commerciale, un circuit de redressement connecté au circuit de filtrage d'entrée, et un circuit d'amélioration de facteur de puissance connecté à une sortie du circuit de redressement, le circuit de filtrage d'entrée, le circuit de redressement et le circuit d'amélioration de facteur de puissance étant partagés par la pluralité de sources d'alimentation à découpage.

3. Châssis d'éclairage à DEL selon l'une quelconque des revendications 1 et 2, dans lequel les sources d'alimentation à découpage sont montées sur un substrat imprimé.
